# EUROPEAN PATENT APPLICATION

(11) **EP 4 814 694 A1**
(43) Date of publication of application: **30.09.2026**
(21) Application number: 26165230.9
(22) Date of filing: 16.03.2026
(51) Int. Cl.: G06F 8/30, G05B 19/042

(54) **AUTOMATED FUNCTION BLOCK GENERATION IN CONTROL SYSTEMS**

(30) Priority: 28.03.2025 IN 202511029972; 09.06.2025 US 202519232656
(71) Applicant: Schneider Electric Private Limited, New West Delhi, 110064 (IN)
(72) Inventor: KHANDELWAL, Vivek, 560067 Bengaluru (IN); GADRE, Nikhil, 560067 Bengaluru (IN)
(74) Representative: Openshaw & Co.

(57) **Abstract**

A system and method for automatically generating a function block using a large language model (LLM) for use within control systems is disclosed. An authentication processor receives(202) a natural language input. The natural language input indicates function variables, events, and objective. The authentication processor executes a LLM function block engine. The LLM function block engine identifies input variables, input events, output variables, and output events based on the natural language input. The LLM function block engine generates (206) one or more algorithms based on the function objective, where the algorithm executes based on an input event, uses the input variables to generate output variables and triggers and output event. The LLM function block engine further renders (212) the variables, events, and algorithms into an event based execution block for applying to the industrial automation system.

## Description

### CROSS-REFERENCE TO RELATED APPLICATION

This application claims the benefit of Indian Patent Application No. 202511029972, filed March 28, 2025 and US Patent Application No. 19/232,656 filed June 9, 2025, the entire disclosures of which are incorporated herein by reference.

### BACKGROUND

Industrial automation requires management of complex control systems and devices operating facilities requiring high levels of efficiency. Many software tools exist to support in management of hardware within the industrial system. However, configuring components within the industrial management software can be complex. Generating function blocks for execution on various devices in the system requires programming expertise. For example, specific standards such as the IEC 61499 framework require a combination of programing expertise and an understanding of standard requirements. Users in the facility may have varying levels of programmatic expertise, limiting the ability for a user to make effective changes or implement various controls. Further, devices from different manufacturers may rely on different programming structures and languages than others. As a result, in order to develop effective function blocks for various devices within the control system, a user must have familiarity with various functional languages and the devices themselves.

### SUMMARY

Aspects of the present disclosure provide a system and methods for automatically generating a function block using a large language model (LLM) for control systems such as industrial automation systems. A user provides a natural language input to an engineering processor. The engineering processor executes a LLM function block engine to generate a function block for execution within the industrial automation system. In accordance with further aspects of the present disclosure, the LLM function block engine continually trains on generated function blocks and utilizes low-rank adaptation (LoRA) to speed training and minimize resource costs for executing the model.

In an aspect, a system for automatically generating a function block includes an engineering processor and an engineering database coupled to the processor. The engineering database stores historical function block information. The system also includes a memory coupled to the engineering processor. When executed by the engineering processor, computer-executable instructions stored in the memory configure the engineering processor for executing an LLM function block engine trained on the historical function block information to generate a function block execution model. Executing the LLM function block engine includes receiving a natural language input, the natural language input indicating at least one of one or more function objectives, one or more function states, or one or more function variables and determining one or more input variables, one or more output variables, one or more input events, and one or more output events based on the natural language input and the indicated function objectives, function states, and function variables. Executing the LLM function block engine further includes generating one or more algorithms based on the natural language input and the function objectives, wherein the algorithm is configured to receive a subset input of the input variables, perform an operation based on one of the function objectives, and return a subset output of the output variables when executed and identifying one or more state definitions based on the natural language input, the algorithms, and the function states. Executing the LLM function block engine also includes rendering the input variables, the output variables, the input variables, the output variables, the state definitions, and the algorithms into the function block execution model, the function block execution model indicating each algorithm executes in response to at least one of the input events associated with the function objective and each algorithm triggering at least one of the output events after execution.

In another aspect, a method for automatically generating a function block includes receiving a natural language input, the natural language input indicating one or more function objectives, one or more function states, and one or more function variables and executing, by an automation expert processor, an LLM function block engine. Executing the LLM function block engine includes determining one or more input variables, one or more output variables, one or more input events, and one or more output events based on the natural language input, the function objective, and the function variables. Executing the LLM function block engine also includes generating one or more state definitions based on the function states and generating one or more algorithms based on the natural language input and the function objective, wherein the algorithm is configured to receive a subset input of the input variables, perform an operation based on one of the function objectives, and return a subset output of the output variables when executed. Executing the LLM function block engine further includes rendering the input variables, the output variables, the input events, the output events, the state definitions, and the algorithms into a function block execution model, the function block execution model indicating each algorithm executes in response to at least one of the input events associated with the function objective and each algorithm triggering at least one of the output events after execution. The method also includes generating an execution control chart of the function block execution model.

In yet another aspect, a method for training a reusable software component LLM includes receiving reusable software component information, the reusable software component information comprising reusable software component syntax information, reusable software component semantics information, and reusable software component practices information. The method also includes training the LLM reusable software component engine based on the reusable software component information and the historical reusable software component information and receiving one or more test natural language inputs. The method further includes generating a test reusable software component result based on the test natural language inputs and modifying the parameters of the LLM reusable software component engine as a result of comparing the test reusable software component result to an expected test reusable software component result.

Other objects and features of the present invention will be in part apparent and in part pointed out herein.

### BRIEF DESCRIPTION OF THE DRAWINGS

FIG. 1 illustrates a block diagram of a system for automatically generating a function block using an LLM according to an embodiment.
FIG. 2 is a flow diagram illustrating the process of automatically generating a function block according to an embodiment.
FIG. 3 is a block diagram illustrating a function block complying the IEC 61499 standard according to an embodiment.
FIG. 4 is an execution control chart associated with a function block according to an embodiment.
FIGs. 5A and 5B are an example of an execution control model rendered as an XML document according to an embodiment.
FIG. 6 is a flow diagram illustrating the process of training a LLM with function block information according to an embodiment.
FIG. 7 is a flow diagram illustrating the process of updating an LLM using low-rank adaptation (LoRA) according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

To meet the needs of an industrial system, tools are needed for efficient management, configuration, and control of devices within the system. Optimally, an interactive engineering management software provides simplified management and programming tools for users. Users refers to any entity configuring and/or managing function block programing. For example, users may include operators of a plant, personnel with programming expertise in the industrial environment, or other automated devices that may provide instructions for configuring or creating the function blocks. However, each device within the system require function blocks for execution within the environment. Because devices may originate from various manufacturers, different requirements may apply. To simplify and unify management, standards create uniform guidelines for creating function blocks or other reusable software components. For example, IEC 61499 provides a standard for management within industrial applications.

The need for distributed control topologies has resulted in the development of a programming language standard such as IEC 61499, which is an international standard published by International Electrotechnical Commission dedicated to distributed (event-based) industrial applications. Generally, IEC 61499 defines a generic architecture that enables an application-centric design in which one or more applications, defined by networks of interconnected function blocks, are created for the whole system and subsequently distributed to available devices. A function block is a convenient programming mechanism that consolidates a group of programming instructions to perform a specific and normalized action, such as speed control, interval control, or counting. A function block may comprise configuration data, a set of operating parameters, and usually one or more data inputs and outputs. All devices within a system are described within a device model and the topology of the system is reflected by the system model. IEC 61499 addresses the topic of a function blocks-based, distributable control application for industrial process measurement and control systems.

In the IEC 61499 architectural model, distributable applications are built by interconnecting instances of reusable function block types with appropriate event and data connections in the same manner as designing a circuit board with integrated circuits. Using IEC 61499-compliant software tools, these function blocks can be distributed and then deployed across a network to a runtime component of physical devices (controllers) compliant with IEC 61499. In this manner, distributed control and automation systems are configurable from libraries of reusable IEC 61499-compliant components.

According to this standard, control application execution is event-driven, where events represent changes in the system's state or conditions, unlike the classical scan-based distributed control systems. The IEC 61499 standard also specifies a set of software components and applications that an implementer of the standard must implement or develop.

While the IEC 61499 standard provides structure for function block development, without additional tools usage of the standard is reliant on individual user expertise with the standard. By utilizing specially trained machine learning models such as LLMs in combination with interactive engineering management software, a system can provide easy and efficient generation of function blocks for implementation within an industrial automation system. Further, by leveraging fine-tuned training, such as through LoRA, an LLM may operate on relatively lightweight hardware within the industrial automation system and with a more efficient and targeted training process.

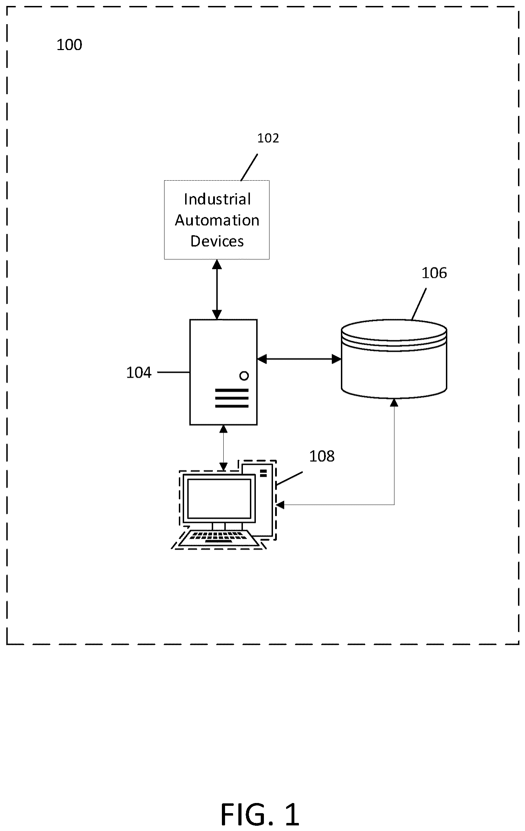

Referring to the figures and description below, a system for generating a function block is disclosed. FIG. 1 is a block diagram illustrating the system. The system generates a function block for controlling and operating industrial automation devices 102. Industrial automation devices 102 can include control devices such as distributed control systems (DCS), a supervisory control and data acquisition (SCADA) system, programmable automation controllers (PACs), remote terminal units (RTUs), industrial automation and control systems (IACS), intelligent electronic devices (IEDs). Additionally, the industrial automation devices 102 can include industrial equipment for performing the industrial process such as sensors, robotics, or other machinery. Examples of various industrial automation devices 102 of the industrial automation system are further described in U.S. Patent Application Publication No. 2024/0377808, entitled, "Systems and Methods for Autonomous Anomaly Management of an Industrial Site," assigned to Schneider Electric System USA, Inc., the entire contents of which are hereby incorporated by reference. While described as a function block the function block may be any other form of reusable software component. In some embodiments, the generated function block conforms with the IEC 61499 standard. However, while described below with respect to the IEC 61499 standard, other software standards may define the reusable software component requirements. An engineering processor 104 generates the function block or reusable software component. In some embodiments, the engineering processor 104 monitors and controls operation of the industrial system within the industrial facility. In other embodiments, the engineering processor 104 operates outside the industrial facility through the cloud. The engineering processor 104 electronically couples with a memory storing instructions for performing generation of the function block.

In some embodiments, the engineering processor 104 of FIG. 1 executes interactive engineering management software enabling a user to configure and alter the industrial system and its components. The engineering processor 104 couples with input and output devices such as a keyboard, mouse, displays, and/or microphone for inputting information to the processor 104 and interactive software. Further, the interactive engineering management software enables a user to input information for function block generation. The interactive software further displays aspects of the industrial automation system including function block information and execution control charts for the related function blocks. For example, Schneider Electric's EcoStruxure Automation Expert (EAE) provides a suitable interactive software for managing aspects of the system for generating a function block as well as the industrial automation system itself.

An engineering database 106 electronically couples with the engineering processor 104. The engineering database 106 stores information about the industrial automation system. In some embodiments, the engineering database 106 further stores standard information about function block and reusable software component generation. Standard information includes syntax, semantic, and best practices information. In some embodiments, the syntax, semantic, and best practices information are defined by a standard such as IEC 61499. In one or more embodiments, the engineering database 106 additionally stores historical function block information, such as previously generated function blocks themselves, information about the devices associated with the function block, and execution information for the function blocks.

Referring further to FIG. 1, an LLM function block engine 108 receives an input information from a user to generate a function block. The engineering processor 106 executes the LLM function block engine 108. The LLM function block engine 108 trains, described further below, on historical function block information as well as pre-generated function blocks designed to execute tasks within the industrial automation system. In some embodiments, the LLM function block engine 108 further trains on semantics, syntax, and best practice information for the generation of function blocks. In some embodiments, the LLM function block engine 108 implements LoRA to update the model based on industrial system information. By utilizing LoRA, described further below, the model updates targeted parameters and enables simplified retraining and execution.

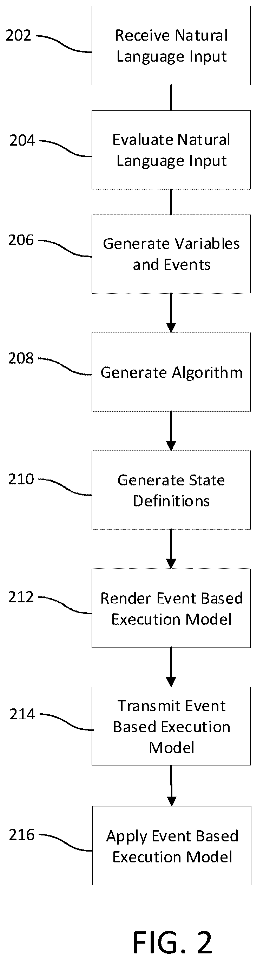

FIG. 2 is a flow diagram illustrating the process of generating a function block according to an embodiment. Starting at step 202, the engineering processor 104 receives a natural language input to generate a function block. In some embodiments, the user inputs text into a prompt of the interactive software to create the natural language input. In other embodiments, the user speaks the input into a microphone coupled to the engineering processor 104, to which a speech-to-text engine renders into text. For example, a user may input a request to "write 61499 code for analog input scaling with raw high and raw low value and Engineering high and engineering value."

In some embodiments, the LLM function block engine 108 executed by the engineering processor 104 evaluates the input text at step 204. The LLM function block engine 108 evaluates the text to determine whether the text provides enough information for the generation of the function block. For example, to generate a proper function block according the IEC 61499 standard, the LLM function block engine 108 may need to identify a device for execution control, the function objective, one or more function states, and function variables. This input information thus can be correlated to components of the function block such as input events, input variables, the algorithm logic, output events, and output variables.

Referring to the previous example input of "write 61499 code for analog input scaling with raw high and raw low value and engineering high and engineering low value," the LLM function block engine 108 may determine that the input identifies an objective, perform "analog input scaling" and a set of inputs "raw high and raw low value and Engineering high and engineering low value." As a result, the LLM function block engine 108 then determines whether the information may be rendered into a function block. In some embodiments, if the LLM function block engine 108 determines that the input text is insufficient for generation, the LLM function block engine 108 generates a prompt to present to the user requesting for more information. Then the LLM function block engine 108 may receive a supplemental or alternative input from the user to meet the requirements for generation. For example, if a user only requests "generate a function block to perform analog input scaling," the LLM function block engine 108 may request the user to indicate to which variables the scaling is to be applied. In other embodiments, if the input is insufficient, the LLM function block engine 108 generates an error and returns to receive a new input from the user at 202 of FIG. 2. Thus, in response to the example insufficient requests, the LLM function block engine 108 requests the user to input a complete request for generation. Then at step 206, the LLM function block engine 108 begins to generate components of the function block.

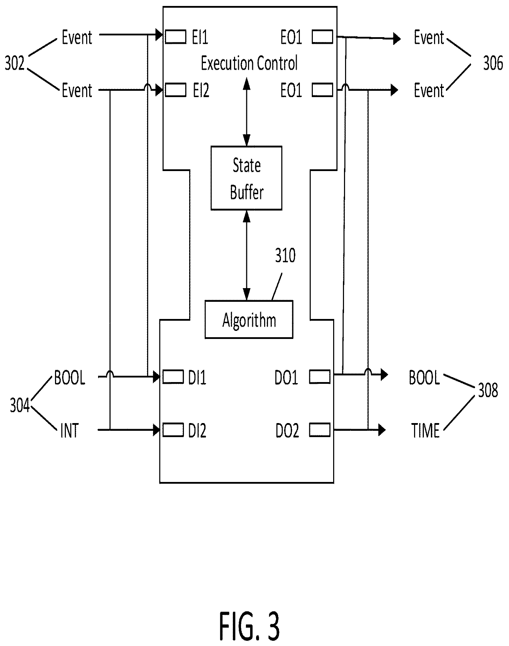

FIG. 3 is a block diagram illustrating the structure of a function block according to the IEC 61499 standard. The LLM function block engine 108 identifies and generates input events 302 and input variables 304 as well as output events 306 and output variables 308. An input event 302 to a function block triggers the function block to perform execution of the algorithm 310 based on the current state and the current input variables 304. For example, an input event 302 might be the completion of a prior task within the industrial automation system or the triggering of an alarm on a device of the system. The input variables 304 represent the inputs on which the function execution will perform. The output variables 308 similarly represent the variables resulting from the execution of the function block, while the event output 306 is an event trigger to be perform upon completion of the associated execution of the function block. In some embodiments, defining the variables of the function block includes defining the typing of the variables according to a standard. For example, based on the natural language input the LLM function block engine determines whether a given input variable 304 should be typed as a Boolean, integer, time, string, or any other typing.

The LLM function block engine 108 generates one or more algorithms based on the natural language input at step 208 of FIG. 2. Based on the function objective identified within the natural language input, the LLM function block engine 108 generates an algorithm for obtaining the objective. In some embodiments, the LLM function block engine 108 identifies multiple algorithms associated with same function block each associated with one or more input events. For example, the user may request to generate a function block for tracking a count. The count may increment in response to one event trigger, while the count decrements in response to another event trigger. Thus, the LLM function block engine generates a function for incrementing, such as X=X+1, associated with the first event trigger, and the engine generates a function for decrementing, such as X=X-1, associated with the second event trigger.

The LLM function block engine 108 further identifies components of the function block at step 210. For example, in some embodiments, the LLM function block engine 108 generates state and/or transition definitions for the creation of an execution control chart. An execution control chart is a graph that illustrates the execution process for the function block over time. As a result, the state and transition definitions provide information to indicate the process steps for execution of the function block for generation of the execution control chart. In one or more embodiments, the execution control chart information follows semantic requirements of the IEC 61499 standard.

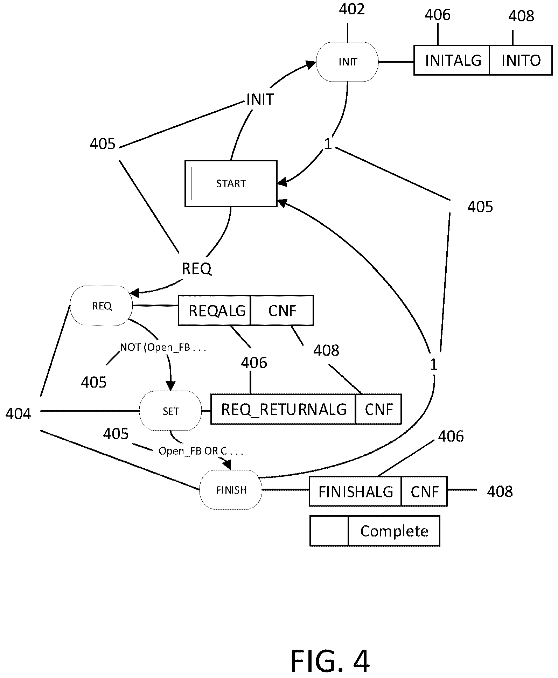

FIG. 4 illustrates an example of an execution control chart associated with a function block according to the IEC 61499 standard. FIG. 4 shows an initialization step for the function block 402 defined by INIT. The execution of the function proceeds with several execution steps 404 defined by REQ, SET, and FINISH. As shown, each step of the function includes a transition condition 405 which may include an input event to perform an algorithm 406 such as INITALG, REGALG, REQ_RETURNALG, and FINISH_ALG, which emits an output event 408 upon completion. As a result, the execution control chart provides a visual overview of the process of executing a function block.

While generation of the components of the function block are described in sequential order, identifying and generating the components may be performed in any suitable order or simultaneously within the LLM function block engine 108. Further, although described as discrete steps, the interaction and reliance of components on other components requires comprehensive analysis by the LLM function block engine 108 in the context of the desired function block output such as the syntax and semantics related to a specific standard.

Referring further to FIG. 2, after generating the components of the function block in step 210, the LLM function block engine 108 renders the components into an event based execution model at step 212. The event based execution model includes the information regarding the function block or, alternatively, a reusable software component. The event based execution model provides a format or structure to render the function block into a form that is human readable or translatable from one system to another. For example, the event based execution model may conform with a standard such as IEC 61499 to define the structure of the components and how those elements are organized. In some embodiments, the event based execution model is rendered into a file format, such as XML, for importing or exporting into the interactive software or other systems.

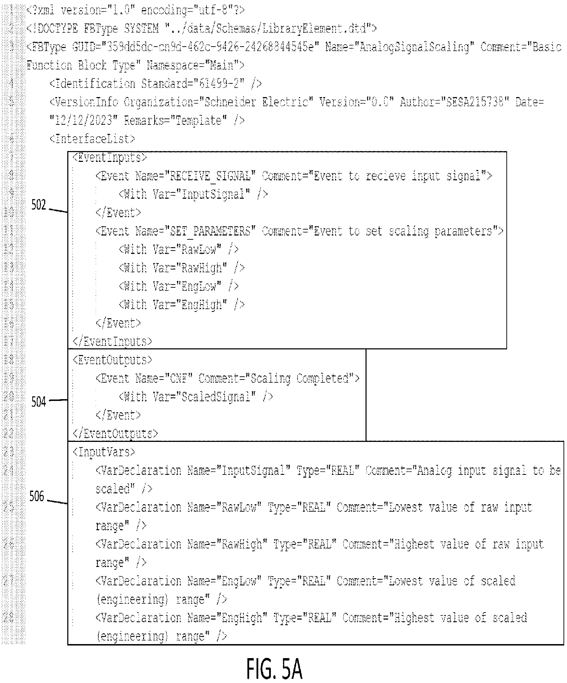

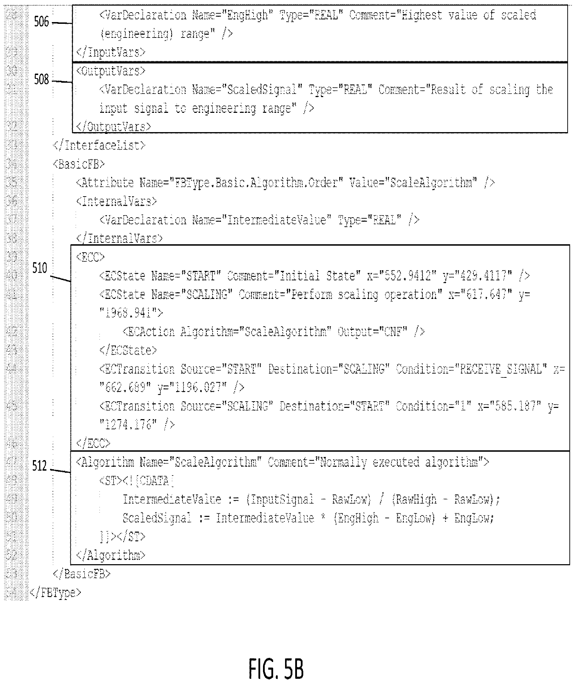

FIGS. 5A and 5B illustrate an example of an event based execution model conforming to the IEC 61499 standard in an XML format. The example event based execution model shows an example model for analog input scaling with raw high, raw low, engineering high, and engineering low as described as an input example above. An input event 502, RECEIVE_SIGNAL, is associated with the EventInput tag, while an output event 504, CNF, is defined with the EventOutputs tag. The input variables 506 are defined by the InputVars tag which includes InputSignal, RawLow, RawHigh, EngLow, and EngHigh, while output variables 508 are defined by the OuputVars. The ECC tag 510 defines the parameters for generating the execution control chart with each state defined with the ECState tag. Finally, the Algorithm tag defines the algorithms 512 for execution by the function block. The example shows scaling the raw high and low values using engineering high and low.

Referring again to FIG. 2, the LLM function block engine 108 transmits the generated function block at step 214. In some embodiments, the function block is transmitted as an exported XML file. In other embodiments, the function block is transmitted to the interactive software to apply in control and operation of the industrial automation system. In one embodiment, the interactive software presents the function block and the execution control chart to a user for review before applying to the system. The user may make adjustments to the function block. In response to changes of the function block, the function block is fed into the LLM function block engine for retraining 108. In one or more embodiments, rather than modifying the function block or event based execution model directly, the user of the interactive software provides a supplemental natural language input. The supplemental input may indicate a change to the functionality of the function block, such as altering the objective or changing variable names, or the supplemental input may indicate additional functionality required for the function block that was not previously identified in the original natural language input. Following this supplemental input, the process returns to generate a new or updated function block starting at step 204.

In one or more embodiments, the event based execution model is directly applied to the system through the interactive software at step 216. The event based execution model operates on the industrial system performing any of various functions such as monitoring, control, or configuration of devices within the system. Execution of the event based execution model involves receiving one or more of the input variables, and in response to an input event trigger, executing an algorithm associated with the input event trigger. Then generating the output variables associated with the algorithm and triggering the associated output event. After being applied, the event based execution model may be monitored to evaluate performance. If the event based execution model requires modification, the user may modify the model directly through the interactive software or generate a new model by inputting a new natural language input for the process starting at 202. Because the process quickly generates executable function blocks for the system, users can rapidly update or modify the execution of the industrial automation system based on the changing environment such as new equipment, new production processes, or new production requirements.

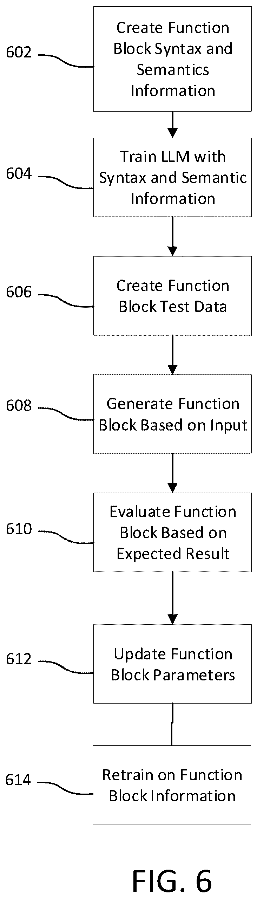

FIG. 6 is a flow diagram illustrating the process of training a LLM to generate function blocks according to an embodiment. At step 602, function block information must be generated for training the LLM. In one or more embodiments, the function block information is compiled into prompts which are submitted to the LLM. In some embodiments, the function block information includes syntax information, semantics information, and best practices information. The syntax information provides information to the LLM regarding the structure of the language. Because each programming language has unique standards in how the language must be structured and what characters may be used, the LLM must be trained on the specific structure associated with the given language. For example, whether the programming language requires a ";" to terminate a statement is syntax information or how and when brackets may be used. Semantics information provides information on the meaning of the language. Semantic training information trains the LLM on how to interpret a language and how to determine whether a given statement is valid. For example, a semantic rule indicates whether or not an operation is valid regardless of the syntax such as performing an increment operation on a string such as "x=x+1" where x is defined as string. By training on syntax and semantics information the LLM trains to generate function blocks or reusable software components for the given language.

In some embodiments, the function block information further includes best practices information, pre-generated function block information, or historical function block information. Best practices information describes best practices for coding within a specific language. While a given statement may generally comply with syntax and semantic requirements, there may be best practices for readability or efficiency that are not capture within syntax or semantic information. In some embodiments, the function block information for training includes pre-generated function blocks. The pre-generated function blocks include all information, such as inputs and outputs, related to a working function block for common operations. As a result, the LLM additionally trains on function blocks that conform with syntax, semantics, and best practices standards to ensure both operational and efficient function blocks.

In one or more embodiments, the function block information includes historical function block information. The historical function block information may include function blocks currently or previously applied to the current industrial automation system, including adjustments a user has made to the function block, as noted previously in connection with FIG. 2. Thus, the LLM can be trained and/or retrained based on the specific operations of the industrial automation system connected to the engineering processor 106 and/or on user adjustments to the generated function blocks. In one embodiment, the pre-generated function blocks or the historical functions blocks include natural language statements indicating a request for the generation of the associated function block. As a result, the training data also provides the LLM both natural language information relating to the generation of a function block as well as the programming language specific information. In some embodiments, the function block information is based on a standard. For example, the LLM model may be trained specifically utilizing the IEC 61499 standard to generate function blocks suitable for use within the industrial automation environment.

Referring again to FIG. 6, following the generation of the function block information, the LLM trains on the function block information at step 604. The generated function block information is then applied to the LLM to train the model. After initial training of the model, the model is evaluated and refined starting with generating function block test data at step 606. The function block test data includes test natural language inputs that are natural language statements indicating desired objective for a function block that were not within the training data. The function block test data also includes test inputs and outputs for the function block. For example, the test data may include a test event trigger, a set of input variables, and expected output variables resulting from execution of a function block achieving the objective of the natural language input. In some embodiments, the function block test data also includes an expected event based execution model of the desired function block.

After generation of the test data, the LLM is tested by generating a function block with the model at step 608. In some embodiments, testing the LLM includes providing the model with a test natural language input. In one or more embodiments, the LLM acts as a chat bot to further develop the natural input language input. In this embodiment, the test natural language input may be a partial input to evaluate the LLM's ability to identify missing information. Thus, the test data may include a sequence of natural language inputs to provide to the LLM in response to subsequent requests. After receiving a complete natural language input or a set of inputs sufficient for generation, the LLM generates a function block to achieve the objective of the test natural language input based on the information further contained in the natural language input.

At step 610 of FIG. 6, the function block generated by the LLM is evaluated. Evaluating the function block generation may involve consideration of various factors such as syntactical correctness, semantic correctness, compliance with best practices, and whether the function block achieves the objective. An initial evaluation of the function block includes providing one or more input variables to the function block and then triggering an input event. Then, the output variables and output event triggers are compared to expected output variables and output event triggers. In one or more embodiments, although the output may meet the expected outputs, the generated function block may be evaluated for other considerations. Successful execution of the function block to receive expected outputs indicates that the function block meets the syntax and semantics requirements, however, it does not indicate whether the function block conforms with best practices. As a result, in some embodiments, the actual algorithm may be evaluated to determine whether the function block executes in undesirable ways or performs unnecessary functions requiring additional execution time than would otherwise be expected.

In response to evaluating the LLM, the LLM is updated at step 612. Updating the LLM involves fine-tuning parameters of the model based on the results of evaluation. In some embodiments, initial training and subsequent updates of the model updating involves direct modification of the parameters. In other embodiments, updating the model during initial training includes applying LoRA, further described below. In yet other embodiments, the initial training includes direct modification of the parameters, while subsequent updates occur by applying LoRA. In updating the LLM, different aspects of the model may require adjustment. For example, the model may need parameters modified related to interpreting the natural language input if the model misidentified any of the variables, events, or objective. Alternatively, or additionally, parameters related to generation of the function block may require updating if the model generated a function block with errors related to syntax, semantics, or general execution.

The model continues to retrain on function block information at step 614. After completion of the initial training, the LLM may be implemented within the industrial automation system through execution by the LLM function block engine 108. After generating a function block in response to a natural language input sent by a user, the LLM receives a final version of the function block either exported or applied after modification by the user. For example, if the user modifies a variable or the algorithm, the LLM utilizes that information to retrain. As previously mentioned, retraining the LLM, in some embodiments, involves updating the parameters of the model directly. In other embodiments, retraining involves applying LoRA to the model to simplify the training process and minimize execution costs for the model.

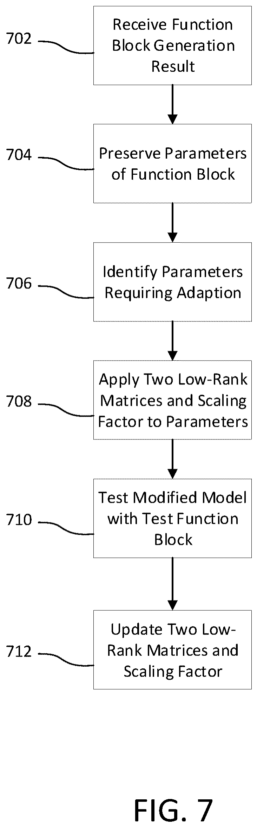

FIG. 7 is a flow diagram illustrating the process of updating a model through application of LoRA. LoRA allows the modification and updating of LLM's through a lightweight process that simplifies execution for efficient operation on limited processing resources. To update the model, first the engineering processor 106 receives a function block generation result at 702. The function block generation result may be an unmodified function block generated by the process described above. Alternatively, the function block generation result may include modifications provided by a user or feedback associated with the unmodified function block result.

In updating the LLM through LoRA, the parameters of the model are "frozen" at step 704. By "freezing" or leaving the parameters of the model unaltered, the original trained knowledge of the LLM is preserved. Then parameters are identified that require adaptation at step 706. Rather than updating the entire model as required through some updating methodologies, only parameters requiring changes are updated in a simplified manner. As a result, only a subset of key layers learns task-specific representations such as specific requirements such as syntax, semantics, and best practices information for generating a function block.

Next, two low-rank matrices and a scaling factor are applied to the parameters of the model at step 708. LoRA performs adaptation through decomposing parameter updates into two low-rank matrices, A and B. The rank, r, of these matrices is set significantly lower than the original parameter matrix dimensions. For each of the parameters requiring adaptation, W', the LoRA adapts the parameters through W' = W + α · A · BW'. Where W' is the adapted parameter to be applied in the final model, A and B represent the low rank matrices, and α represents a scaling factor that controls the impact of the parameter modifications. Applying LoRA reduces the number of parameters to be tuned and lowers memory requirements. Because the low-rank matrices, A and B, require less resources to compute and store, the overall model footprint is reduced. Further, LoRA speeds up the training process and allows execution on lighter-weight hardware, such as an 8 gigabyte GPU.

Updating the model using LoRA continues with testing the model at step 710. The model is tested by providing a set of natural language prompts associated with pre-generated or historical function block information. After providing the training set at step 712, the results are analysed and training the model continues with updating the low-rank matrices and scaling factor as described above. By utilizing application-specific training information, such as function block information, the low-rank layers are tuned to respond to application-specific prompts. Thus the parameter-efficient fine-tuning (PEFT) can be illustrated by the function: $PEFT = LoRA \left({P}_{min}\right) + {Δ}_{adapt} \left(x, y\right)$ Where Pₘᵢₙ represents the minimum parameters required for task-specific adaptation and Δ_{adapt}(x,y) represents the low-rank adjustments applied to the model weights during fine-tuning. As a result, a LLM can be tuned to respond to prompts and generated specific responses for a unique solution such as function blocks according to the IEC 61499 standard. Similarly, the limited computational and memory demands allow the model to be executed on limited hardware within the industrial automation environment.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

Further aspects of the invention are provided by the subject matter of the following clauses:
Clause 1. A system for automatically generating a function block, the system comprising: an engineering processor; an engineering database coupled to the processor, the engineering database storing historical function block information; a memory storing computer-executable instructions that, when executed by the engineering processor, configure the engineering processor for: executing, a large language model (LLM) function block engine trained on the historical function block information to generate a function block execution model, wherein executing the LLM function block engine comprises: receiving a natural language input, the natural language input indicating at least one of one or more function objectives, one or more function states, or one or more function variables; determining one or more input variables, one or more output variables, one or more input events, and one or more output events based on the natural language input and the indicated function objectives, function states, and function variables; generating one or more algorithms based on the natural language input and the function objectives, wherein the algorithm is configured to receive a subset input of the input variables, perform an operation based on one of the function objectives, and return a subset output of the output variables when executed; identifying one or more state definitions based on the natural language input, the algorithms, and the function states; and rendering the input variables, the output variables, the input variables, the output variables, the state definitions, and the algorithms into the function block execution model, the function block execution model indicating each algorithm executes in response to at least one of the input events associated with the function objective and each algorithm triggering at least one of the output events after execution.
Clause 2. The system as set forth in Clause 1, wherein the memory stores computer-executable instructions that, when executed by the engineering processor, further configure the engineering processor for: executing, an engineering advising engine, wherein executing the engineering advising engine comprises: receiving the function block execution model; storing the function block execution model in the engineering database; generating an execution control chart based on the function block execution model; and presenting, on a display coupled to the processor, the execution control chart and the function block execution model.
Clause 3. The system as set forth Clause 2, wherein executing the engineering advising engine further comprises: receiving an update natural language input; identifying one or more function block components to update based on the natural language input, the function block components comprising at least one of the input variables, the output variables, the input variables, the output variables, the state definitions, or the algorithms; and updating the function block execution model with the function block components.
Clause 4. The system as set forth in any of Clauses 1 to 3, wherein the memory stores computer-executable instructions that, when executed by the engineering processor, further configure the engineering processor for: receiving function block information, the function block information comprising function block syntax information, function block semantics information, and function block practices information; training the LLM function block engine based on the function block information and the historical function block information; receiving one or more test natural language inputs; generating a test function block result based on the test natural language inputs; and modifying one or more parameters of the LLM function block engine as a result of comparing the test function block result to an expected test function block result.
Clause 5. The system as set forth in any of Clauses 1 to 4, wherein the memory stores computer-executable instructions that, when executed by the engineering processor, further configure the engineering processor for: updating the LLM function block engine, wherein updating the function block engine comprises: receiving a function block result, the function block result comprising one or more resultants function block execution models and one more previous natural language inputs; preserving one or more parameters of the LLM function block engine generated by training; identifying one or more parameters requiring adaptation based on the function block results; and applying two low-rank matrices and a scaling factor to each of the parameters requiring adaptation.
Clause 6. The system as set forth in any of Clauses 1 to 5, wherein the historical function block information conforms with the IEC 61499 standard and the function block execution model conforms with the IEC 61499 standard.
Clause 7. The system as set forth in any of Clauses 1 to 6, wherein the function block execution model comprises a function block XML file.
Clause 8. The system as set forth in any of Clauses 1 to 7, further comprising: an industrial automation device coupled to the engineering processor, the industrial automation device comprising: a device processor; and a memory coupled to the device processor storing computer-executable instructions that, when executed by the device processor, configure the device processor for: receiving, from the engineering processor, the function block execution model; receiving one or more device inputs associated with the input variables; receiving a triggered input event associated with one of the input events; executing the algorithm associated with the triggered input event to update the output variables based on the result of applying the algorithm to the input variables; and triggering the output event associated with the algorithm.
Clause 9. The system as set forth in any of Clauses 1 to 8, wherein executing the LLM function block engine further comprises: receiving, prior to receiving the natural language input, a partial input, the partial input indicating at least one of the function objectives, the function states, or the function variables; generating one or more prompts based on the partial input, the prompts indicating additional required information based on at least one of the function objectives, the function states, or the function variables.
Clause 10. The system as set forth in any of Clauses 1 to 9, wherein the LLM function block engine comprises a low-rank adaptation (LoRA) LLM.
Clause 11. A method for automatically generating a function block, the method comprising: receiving a natural language input, the natural language input indicating one or more function objectives, one or more function states, and one or more function variables; executing, by an automation expert processor, a large language model (LLM) function block engine, wherein executing the LLM function block engine comprises: determining one or more input variables, one or more output variables, one or more input events, and one or more output events based on the natural language input, the function objective, and the function variables; generating one or more state definitions based on the function states; generating one or more algorithms based on the natural language input and the function objective, wherein the algorithm is configured to receive a subset input of the input variables, perform an operation based on one of the function objectives, and return a subset output of the output variables when executed; rendering the input variables, the output variables, the input events, the output events, the state definitions, and the algorithms into a function block execution model, the function block execution model indicating each algorithm executes in response to at least one of the input events associated with the function objective and each algorithm triggering at least one of the output events after execution; and generating an execution control chart of the function block execution model.
Clause 12. The method as set forth in Clause 11, the method further comprising: receiving function block information, the function block information comprising function block syntax information, function block semantics information, and function block practices information; training the LLM function block engine based on the function block information and the historical function block information; receiving one or more test natural language inputs; generating a test function block result based on the test natural language inputs; and modifying the parameters of the LLM function block engine as a result of comparing the test function block result to an expected test function block result.
Clause 13. The method as set forth in Clause 11 or Clause 12, further comprising: receiving a test input comprising one or more test variable inputs, one or more test variable outputs, and one or more test event inputs; applying the test inputs to the function block execution model to generate a test result; comparing the test result to the test variable outputs; generating, in response to the output variables failing to match the test variable outputs, one or more updated algorithms; and rendering the input variables, the output variables, the input variables, the output variables, the state definitions, and the updated algorithms into an updated function block execution model.
Clause 14. The method as set forth in any of Clauses 11 to 13, wherein rendering the function block execution model is based on the IEC 61499 standard.
Clause 15. The method as set forth in any of Clauses 11 to 14, the method further comprising: receiving, prior to receiving the natural language input, a partial input the partial input indicating at least one of the function objectives, the function states, or the function variables; executing, by the automation expert processor, the LLM function block engine, wherein executing the LLM function block engine further comprises: generating one or more prompts based on the partial input, the prompts indicating additional required information based on at least one of the function objectives, the function states, or the function variables.
Clause 16. The method as set forth in any of Clauses 11 to 15, wherein executing the LLM function block engine further comprises: generating, before determining the input variables, a prompt based on the natural language input, the prompt comprising a request for updated function block information; transmitting, to a client, the prompt; and receiving, from the client, a natural language prompt response; and wherein determining the input variables, the output variables, the input events, and the output events is further based on the natural language prompt response, generating the state definitions is further based on the natural language prompt response, and generating the algorithms is further based on the natural language prompt response.
Clause 17. The method as set forth in any of Clauses 11 to 16, further comprising: transmitting, to an industrial automation device, the function block execution model; executing, by a processor of the industrial automation device, one of the algorithms of the function block execution model in response to a triggered event.
Clause 18. A method for training a reusable software component large language model (LLM), the method comprising: receiving reusable software component information, the reusable software component information comprising reusable software component syntax information, reusable software component semantics information, and reusable software component practices information; training the LLM reusable software component engine based on the reusable software component information and the historical reusable software component information; receiving one or more test natural language inputs; generating a test reusable software component result based on the test natural language inputs; and modifying the parameters of the LLM reusable software component engine as a result of comparing the test reusable software component result to an expected test reusable software component result.
Clause 19. The method as set forth in Clause 18, further comprising: receiving a reusable software component result, the reusable software component result comprising one or more resultant reusable software component execution models and one more previous natural language inputs; preserving the parameters of the LLM reusable software component engine generated by training; identifying one or more parameters requiring adaptation based on the reusable software component results; and applying two low-rank matrices and a scaling factor to each of the parameters requiring adaptation.
Clause 20. The method as set forth in Clause 18 or Clause 19, wherein the reusable software component syntax information comprises IEC-61499 standard syntax information, the reusable software component semantics information comprises IEC-61499 standard semantics information, and the reusable software component practices information comprises IEC-61499 standard practices information.

## Claims

1. A system for automatically generating a function block, the system comprising:
an engineering processor;
an engineering database coupled to the processor, the engineering database storing historical function block information; and
a memory storing computer-executable instructions that, when executed by the engineering processor, configure the engineering processor for:
executing, a large language model, LLM, function block engine trained on the historical function block information to generate a function block execution model, wherein executing the LLM function block engine comprises:
receiving a natural language input, the natural language input indicating at least one of one or more function objectives, one or more function states, or one or more function variables;
determining one or more input variables, one or more output variables, one or more input events, and one or more output events based on the natural language input and the indicated function objectives, function states, and function variables;
generating one or more algorithms based on the natural language input and the function objectives, wherein the algorithm is configured to receive a subset input of the input variables, perform an operation based on one of the function objectives, and return a subset output of the output variables when executed;
identifying one or more state definitions based on the natural language input, the algorithms, and the function states; and
rendering the input variables, the output variables, the input variables, the output variables, the state definitions, and the algorithms into the function block execution model, the function block execution model indicating each algorithm executes in response to at least one of the input events associated with the function objective and each algorithm triggering at least one of the output events after execution.

2. The system according to claim 1, wherein the memory stores computer-executable instructions that, when executed by the engineering processor, configure the engineering processor for:
executing, an engineering advising engine, wherein executing the engineering advising engine comprises:
receiving the function block execution model;
storing the function block execution model in the engineering database;
generating an execution control chart based on the function block execution model; and
presenting, on a display coupled to the processor, the execution control chart and the function block execution model.

3. The system according to claim 2, wherein executing the engineering advising engine comprises:
receiving an update natural language input;
identifying one or more function block components to update based on the natural language input, the function block components comprising at least one of the input variables, the output variables, the input variables, the output variables, the state definitions, or the algorithms; and
updating the function block execution model with the function block components.

4. The system according to any of claims 1 to 3, wherein the memory stores computer-executable instructions that, when executed by the engineering processor, configure the engineering processor for:
receiving function block information, the function block information comprising function block syntax information, function block semantics information, and function block practices information;
training the LLM function block engine based on the function block information and the historical function block information;
receiving one or more test natural language inputs;
generating a test function block result based on the test natural language inputs; and
modifying one or more parameters of the LLM function block engine as a result of comparing the test function block result to an expected test function block result.

5. The system according to any of claims 1 to 4, wherein the memory stores computer-executable instructions that, when executed by the engineering processor, configure the engineering processor for:
updating the LLM function block engine, wherein updating the function block engine comprises:
receiving a function block result, the function block result comprising one or more resultants function block execution models and one more previous natural language inputs;
preserving one or more parameters of the LLM function block engine generated by training;
identifying one or more parameters requiring adaptation based on the function block results; and
applying two low-rank matrices and a scaling factor to each of the parameters requiring adaptation.

6. The system according to any of claims 1 to 5, wherein at least one of:
the historical function block information conforms with the IEC 61499 standard;
the function block execution model conforms with the IEC 61499 standard;
the function block execution model comprises a function block XML file; or
the LLM function block engine comprises a low-rank adaptation, LoRA, LLM.

7. The system according to any of claims 1 to 6, comprising:
an industrial automation device coupled to the engineering processor, the industrial automation device comprising:
a device processor; and
a memory coupled to the device processor storing computer-executable instructions that, when executed by the device processor, configure the device processor for:
receiving, from the engineering processor, the function block execution model;
receiving one or more device inputs associated with the input variables;
receiving a triggered input event associated with one of the input events;
executing the algorithm associated with the triggered input event to update the output variables based on the result of applying the algorithm to the input variables; and
triggering the output event associated with the algorithm.

8. The system according to any of claims 1 to 7, wherein executing the LLM function block engine comprises:
receiving, prior to receiving the natural language input, a partial input, the partial input indicating at least one of the function objectives, the function states, or the function variables;
generating one or more prompts based on the partial input, the prompts indicating additional required information based on at least one of the function objectives, the function states, or the function variables.

9. A method for automatically generating a function block, the method comprising:
receiving a natural language input, the natural language input indicating one or more function objectives, one or more function states, and one or more function variables;
executing, by an automation expert processor, a large language model, LLM, function block engine, wherein executing the LLM function block engine comprises:
determining one or more input variables, one or more output variables, one or more input events, and one or more output events based on the natural language input, the function objective, and the function variables;
generating one or more state definitions based on the function states;
generating one or more algorithms based on the natural language input and the function objective, wherein the algorithm is configured to receive a subset input of the input variables, perform an operation based on one of the function objectives, and return a subset output of the output variables when executed;
rendering the input variables, the output variables, the input events, the output events, the state definitions, and the algorithms into a function block execution model, the function block execution model indicating each algorithm executes in response to at least one of the input events associated with the function objective and each algorithm triggering at least one of the output events after execution; and
generating an execution control chart of the function block execution model.

10. The method according to claim 9, the method comprising:
receiving function block information, the function block information comprising function block syntax information, function block semantics information, and function block practices information;
training the LLM function block engine based on the function block information and the historical function block information;
receiving one or more test natural language inputs;
generating a test function block result based on the test natural language inputs; and
modifying the parameters of the LLM function block engine as a result of comparing the test function block result to an expected test function block result.

11. The method according to claim 9 or claim 10, comprising:
receiving a test input comprising one or more test variable inputs, one or more test variable outputs, and one or more test event inputs;
applying the test inputs to the function block execution model to generate a test result;
comparing the test result to the test variable outputs;
generating, in response to the output variables failing to match the test variable outputs, one or more updated algorithms; and
rendering the input variables, the output variables, the input variables, the output variables, the state definitions, and the updated algorithms into an updated function block execution model.

12. The method according to any of claims 9 to 11, the method comprising:
receiving, prior to receiving the natural language input, a partial input the partial input indicating at least one of the function objectives, the function states, or the function variables;
executing, by the automation expert processor, the LLM function block engine, wherein executing the LLM function block engine comprises:
generating one or more prompts based on the partial input, the prompts indicating additional required information based on at least one of the function objectives, the function states, or the function variables.

13. The method according to any of claims 9 to 12, wherein executing the LLM function block engine comprises:
generating, before determining the input variables, a prompt based on the natural language input, the prompt comprising a request for updated function block information;
transmitting, to a client, the prompt; and
receiving, from the client, a natural language prompt response; and
wherein determining the input variables, the output variables, the input events, and the output events is further based on the natural language prompt response, generating the state definitions is further based on the natural language prompt response, and generating the algorithms is further based on the natural language prompt response.

14. The method according to any of claims 9 to 13, comprising:
transmitting, to an industrial automation device, the function block execution model;
executing, by a processor of the industrial automation device, one of the algorithms of the function block execution model in response to a triggered event.

15. A method for training a reusable software component large language model, LLM, the method comprising:
receiving reusable software component information, the reusable software component information comprising reusable software component syntax information, reusable software component semantics information, and reusable software component practices information;
training the LLM reusable software component engine based on the reusable software component information and the historical reusable software component information;
receiving one or more test natural language inputs;
generating a test reusable software component result based on the test natural language inputs; and
modifying the parameters of the LLM reusable software component engine as a result of comparing the test reusable software component result to an expected test reusable software component result.
